Europäisches Patentamt

(19) European Patent Office

Office européen des brevets

(11) EP 0 721 917 A1

(12) EUROPEAN PATENT APPLICATION

(43) Date of publication:
17.07.1996  Bulletin 1996/29

(51) Int. Cl.$^6$: C01B 17/04

(21) Application number: 95108213.0

(22) Date of filing: 30.05.1995

(84) Designated Contracting States:
DE FR GB IT NL

(30) Priority: 12.01.1995 KR 9500471

(71) Applicant: Daelim Engineering Co. Ltd.
Seoul (KR)

(72) Inventors:
• Jong-shik Chung
Pohang-city, Kyungsandbuk-do (KR)

• Sang-cheol, Paik
10-211 Pohang eng. college dorm.
Pohang-city, Kyungsangbuk-do (KR)
• Young-chul, Gil
Yangcheon-gu, Seoul (KR)
• Du-soung, Kim
Kangseo-gu, Seoul (KR)

(74) Representative: Tunstall, Christopher Stephen
Dibb Lupton Broomhead,
117 The Headrow
Leeds, West Yorkshire LS1 5JX (GB)

(54) Catalyst for reducing sulphurous acid gas, manufacturing method thereof and method for recovering sulphur using the same

(57) A catalyst for reducing sulfurous acid gas ($SO_x$), a manufacturing method therefore and a method for recovering sulfur from such gases using the catalyst. The catalyst has a high catalytic activity and gives high sulfur recovery rates at relatively low temperatures. The catalyst may be held on a carrier or simply mixed therewith.

EP 0 721 917 A1

## Description

Background of the Invention

The present invention relates to a catalyst and, in particular, to a catalyst for use in the reduction of a sulfurous acid gas ($SO_x$). The invention may be used as a catalyst for reducing sulfurous acid gas contained in waste gases or highly concentrated sulfur dioxide gas. One aspect of the invention utilises a catalytic reduction process involving a hydrogen-containing gas as a reducing agent. Another aspect of the invention includes a manufacturing method for the catalyst and a method for recovering sulfur using a catalytic process.

Such gases are known to be a major cause of acid rain. The most widely adopted process for disposing of such sulfurous gas is a method for processing the sulfurous gas to form gypsum by absorbing it into lime or limestone. If the gypsum has a high purity (more than 94%), it can then be used as an insulation material in the normal manner. However, most of the gypsum is of lower purity and is disposed of in landfill sites.

Unfortunately, such a method produces a new environmental pollution problem by converting the $SO_x$ air pollutant into a soil pollutant. Consequently, the method has seen limited use. The method is particularly unsuitable for densely populated countries where the cost of the necessary land area is prohibitive.

More advanced technology utilises methods of recycling sulfur dioxide in waste gases. Such technology can be categorised into five methods:

1. Recovery of elemental sulfur by catalytic reduction,
2. Recovery of sulfuric acid by catalytic oxidation,
3. Adsorption,
4. Absorption by a solid oxide, and
5. Absorption by a basic liquid.

Among the above processes, the second is currently being used commercially and can be subdivided into Cat-Ox processes, SNOx processes and DeSONOx processes. Further commercial processes include absorption techniques such as the Wellman-Lord process and the DeSOx process. However, these are complicated and costly.

The catalytic reduction involves the reduction of sulfur dioxide into elemental sulfur using materials such as carbon monoxide, hydrogen, methane, natural gases or coke as reducing agents. This method is particularly attractive as sulfur is more convenient to handle, store and transport.

Various reducing agents have been used, GB Patent No. 471,668 (1937) discloses a method of using carbon materials as reducing agents. However, the reaction is carried out at a high temperature of 800°C.

In U.S. Patent Nos. 1,880,741 (1930) and 2,026,819 (1936), hydrogen is used as a reducing agent and Fe-based oxides or Fe-based sulfides are used as catalysts. These methods teach that the reaction temperature is relatively low (approximately 300°C), but the rate of conversion of sulfur dioxide into sulfur is not disclosed.

In U.S. Patent No. 2,361,825 (1944), an Fe-based sulfide is used as a catalyst, but, again, the conversion rate is not disclosed in any detail.

U.S. Patent No. 3,755,550 (1973) discloses a gas containing methane, carbon monoxide and hydrogen to be used as a reducing agent. This patent relates to a method of converting sulfur dioxide into sulfur, at a reaction temperature of about 500°C, using a catalyst. The catalyst is manufactured by holding a complex oxide in alumina. The complex oxide comprises an alkaline earth metal molybdate and a metal chromate selected from the group consisting of cobalt chromate, manganese chromate and copper chromate. The conversion level disclosed is approximately 70%.

There are thus several methods for recovering elemental sulfur from sulfur dioxide gases by catalytic reduction. However, most of the catalytic reactions occur at a relatively high temperature and the catalysts used are not highly active. In addition, neither the maximum conversion rate of sulfide dioxide nor the overall sulfur recovery rate is attained.

It is an object of the present invention to provide a catalyst for reducing sulfurous acid gas. The catalyst having a high activity which manifests as a high reaction activity and a high sulfur recovery rate at a relatively low temperature.

Summary of the Invention

According to a first aspect of the present invention, there is provided a catalyst for use in the reduction of an $SO_x$ species characterised in that the catalyst comprises a sulfide of a transition metal species and at least one carrier.

Preferably, at least some of the said sulfide is held in and/or mixed with the carrier. Acidic carriers have been found to produce improved activity and preferred carriers include alumina ($Al_2O_3$), silica ($SiO_2$), zirconia ($ZrO_2$), titanium oxide ($TiO_2$), silica-alumina ($SiO_2$-$Al_2O_3$), acidic zeolites and activated carbon. Preferred transition metals include chromium, molybdenum, tungsten, iron, cobalt and nickel. A preferred range of the transition metal in the said sulfide is 2-30% weight based on the weight of the said carrier.

It is a further object of the present invention to provide a manufacturing method for such a catalyst.

According to a second aspect of the present invention, there is provided a method for manufacturing a catalyst for use in the reduction of an $SO_x$ species characterised in that the method comprises the steps of:

combining a salt of a transition metal species with a carrier and drying the product;

converting said salt into an oxide of the said metal species; and

converting said oxide into a sulfide of the said metal species.

It is preferred that at least some of the salt is held in and/or is mixed with the carrier prior to drying.

In a preferred manner of carrying out the method of the invention, the salt is converted into the oxide by a sintering process and the oxide is converted into the sulfide by pre-treating the oxide of the transition metal species with a gaseous mixture containing at least one sulfur compound selected from the group consisting of hydrogen sulfide ($H_2S$), mercaptan, carbon disulfide ($CS_2$) and carbon monoxide sulfide (COS), and hydrogen at a temperature of 300°C to 450°C.

It is a further object of the present invention to provide a method of recovering elemental sulfur from sulfurous acid gas whereby the method has a high reaction activity and recovery rate at a relatively low temperature.

According to a third aspect of the present invention, there is provided a method for recovering elemental sulfur from sulfurous acid gas by a catalytic reducing process using a catalyst as aforedescribed.

In a preferred manner of carrying out the third aspect of the invention, the catalytic reducing process occurs at a reaction temperature of 200°C to 350°C and at a space velocity of 1,000 to 10,000 per hour and the reducing agent is hydrogen and the mole ratio of hydrogen/sulfur dioxide ($H_2/SO_2$) is 1 to 10.

The method of recovering elemental sulfur typically comprises the reduction of sulfur dioxide by hydrogen which may be represented by the following stoichiometric equations:

$$SO_2 + 2H_2 \rightarrow 1/2S_2\downarrow + 2H_2O \tag{1}$$

The above reaction can be rewritten in detail as follows:

$$SO_2 + 3H_2 \rightarrow H_2S + 2H_2O \tag{2}$$

$$SO_2 + 2H_2S \leftrightarrow 3/2S_2 \downarrow + 2H_2O \tag{3}$$

Reaction (2) is an irreversible reaction and reaction (3) is an equilibrium reaction, which is generally known as a Claus reaction. In reaction (2), the reduction of $SO_2$ to $H_2S$ occurs in the presence of a metal sulfide and the Claus reaction (3) mainly occurs in the presence of an acidic carrier such as alumina. Thus, $SO_2$ is converted into $H_2S$ in the presence of metal sulfide and then the $H_2S$ generated and the non-reacted $SO_2$ are reacted to be converted into elemental sulfur in the acidic carrier by the Claus reaction.

However, it was discovered that the above two reactions (2) and (3) could occur actively when a catalyst comprising metal sulfide and carrier was used. The catalyst used in recovering elemental sulfur from sulfurous acid gas according to the present invention may be divided into metal sulfide held in a carrier and/or a mechanical mixture of metal sulfide and carrier.

Table 1 shows a typical range of metals, salts and carriers used for manufacturing a catalyst in accordance with the present invention. It has been found that the use of transition metals gives a high conversion rate and sulfur recovery rate and that the preferred transition metals are metals belonging to the Group VIII family. It has also been found generally that acidic carriers are advantageous.

Table 1

| metal | metal salt species | carrier | property | | |
|---|---|---|---|---|---|
| | | | $A^1$($m^2$/g) | $B^2$($cm^3$/g) | $SiO_2$/$Al_2O_3$ ratio$^3$ |
| Cr | $Cr(C_2H_3O_2)_3$ | $\gamma$-$Al_2O_3$ | 250 | 0.70 | |
| Mo | $(NH_4)_6Mo_7O_{24} \cdot 4H_2O$ | $SiO_2$ | 300 | 1.15 | |
| W | $(NH_4)_2WO_4$ | $ZrO_2$ | 80 | 0.35 | |
| Fe | $Fe(NO_3)_3 \cdot 9H_2O$ | $TiO_2$ | 48.5 | 0.54 | |
| Co | $Co(NO_3)_2 \cdot 6H_2O$ | $SiO_2$-$Al_2O_3$ | 511 | 0.93 | |
| Ni | $NiCl_2 \cdot 6H_2O$ | MgO | 5.6 | 0.62 | |
| - | - | NaY | 670 | 0.98 | 4.8 |
| - | - | HY | 663 | 0.98 | 4.8 |
| - | - | H-Mordenite | 373 | 0.98 | 9.8 |
| - | - | activated carbon | 850 | 1.30 | |

$A^1$: specific surface area
$B^2$: pore volume measured after drying
ratio$^3$: mole ratio

In a preferred manner of carrying out the invention, the metal salts are dissolved in water and added to the carrier until the salt has been held on the carrier. The metal salt species and carrier is then dried at 110°C for eight hours and is sintered with air at 450°C for five hours. The sintering effectively converts the transition metal salt into a transition metal oxide. The catalyst is then pre-treated with a gaseous mixture of at least one sulfur compound selected from the group consisting of hydrogen sulfide ($H_2S$), mercaptan, carbon disulfide ($CS_2$) and carbon monoxide sulfide (COS), and hydrogen. The object of the pre-treatment is to convert the oxide into the transition metal sulfide species in order to activate the catalyst. The preferred pre-treatment agents are a gaseous mixture of hydrogen sulfide and hydrogen. Typically, the ratio of hydrogen sulfide to hydrogen in the gaseous mixture is in the range of 2-20% by volume but preferably is 5-15% by volume.

The pre-treating temperature of the catalyst is in the range of 300°C to 450°C and preferably 350°C to 425°C.

The activity of different transition metal sulfides after pre-treating vary according to the kinds of transition metals used. In particular, the sulfides of iron, cobalt or nickel exhibit high activity.

The gas source for supplying the hydrogen reducing agent is generally oxygen free and the ratio of hydrogen:sulfur dioxide ($H_2$/$SO_2$) is in the range of 1 to 10 and is preferably 2 to 5. Various reaction temperatures may be used and, preferably, the temperature of the catalyst is 200°C to 350°C and more preferably 250°C to 350°C. In this latter range, the yield of sulfur is increased. Additionally, the catalyst of the present invention shows a high level of conversion of sulfur oxides $SO_x$ and a high recovery yield of sulfur at a relatively low temperature.

Alternatively, the transition metal sulfide species may be manufactured separately and mechanically mixed with the carrier. Thereafter, the method used is the same as the method aforedescribed with respect to the transition metal sulfide held on the carrier.

In either case, pure hydrogen or a hydrogen-containing gas mixture may be used as the reducing agent, and the reaction preferably occurs at the gas space velocity of 1,000 to 10,000 per hour at atmospheric pressure.

The present invention will now be described by way of example with reference to the following illustrated examples:

EXAMPLE 1

5.5g of $(NH_4)_6Mo_7O_{24} \cdot 4H_2O$ was dissolved in water and was held in 30g of alumina. Subsequently, the solution was dried at 110°C for eight hours and was then sintered at 450°C for five hours to convert molybdenum salt into molybdenum oxide. The carrier containing the molybdenum oxide was then packed in a glass tube reactor having a diameter of 20mm and a length of 600mm and was pre-treated with hydrogen sulfide (10% by volume) and hydrogen (90% by volume) at 400°C for ten hours. Gas was then supplied such that the concentration of sulfur dioxide was 5% by volume, the mole ratio of $H_2$/$SO_2$ being 2 so as to satisfy the above reaction (1). The conversion of sulfur dioxide and the recovery rate of sulfur were then measured with the space velocity at 3,600 per hour and the reaction temperatures at 280°C, 300°C, 325°C, 350°C and 370°C, respectively, as represented in Table 2.

EXAMPLES 2-6

The conversion of sulfur dioxide and the selectivity of sulfur were measured and indicated in Table 2, varying the metal source such as cobalt, nickel, copper, chromium or tungsten, with the same conditions as those in Example 1.

Table 2 shows the conversion of sulfur dioxide and the selectivity of sulfur at various reaction temperatures for transition metals held in alumina. The metals found to have a high activity were iron, cobalt and nickel. These metals were converted from sulfur-deficient metal sulfide into sulfur-sufficient metal sulfide, i.e., metal disulfide, which was formed during pre-treating of the metal oxide. Due to this phenomenon, the activity of the reaction was decreased initially and then increased.

Table 2

| example | | | 1 | 2 | 3 | 4 | 5 | 6 |
|---|---|---|---|---|---|---|---|---|
| catalyst | | | $Mo/Al_2O_3$ | $Co/Al_2O_3$ | $Ni/Al_2O_3$ | $Fe/Al_2O_3$ | $Cr/Al_2O_3$ | $W/Al_2O_3$ |
| reaction temp. (°C) | 280 | conversion | 27.4 | 60.0 | 59.1 | 40.2 | 1.6 | 7.1 |
| | | selectivity | 95.8 | 97.5 | 96.8 | 98.8 | 88.4 | 94.8 |
| | 300 | conversion | 1.8 | 69.7 | 67.9 | 51.9 | 2.9 | 12.3 |
| | | selectivity | 93.5 | 95.7 | 93.9 | 97.2 | 84.8 | 96.2 |
| | 325 | conversion | 44.3 | 74.6 | 72.2 | 64.0 | 8.7 | 23.6 |
| | | selectivity | 90.6 | 92.6 | 91.2 | 95.1 | 88.2 | 94.4 |
| | 350 | conversion | 53.5 | 75.9 | 74.6 | 70.7 | 19.0 | 36.7 |
| | | selectivity | 85.5 | 88.9 | 86.7 | 91.6 | 88.8 | 90.8 |
| | 370 | conversion | 59.4 | 75.7 | 74.0 | 72.8 | 27.9 | 46.7 |
| | | selectivity | 82.6 | 85.8 | 85.7 | 87.7 | 86.9 | 87.9 |

EXAMPLE 7

Under the same conditions as those detailed in Example 2, the reaction was carried out with cobalt catalyst held in alumina and a varying metal content. The reaction temperature was fixed at 300°C and the measured results are indicated in Table 3.

As shown in Table 3, as the metal amount was increased, the recovery of sulfur was slightly increased but eventually at high cobalt levels the recovery decreased. Thus, the preferred metal amount to be held is 2-30wt%.

Table 3

| cobalt content* | SO$_2$ conversion | sulfur recovery yield |
|---|---|---|
| 0.0% | 0.0% | 0.0% |
| 2.1% | 68.7% | 66.2% |
| 4.8% | 71.1% | 67.1% |
| 10.0% | 71.6% | 68.4% |
| 12.8% | 73.4% | 69.8% |
| 21.7% | 74.8% | 71.5% |
| 50.0% | 67.0% | 63.7% |

* Numerical values indicate weight percents of held metal.

EXAMPLE 8

In order to check whether the activity of a catalyst Co/Al$_2$O$_3$ is lowered as the reaction proceeds, a deactivation experiment was carried out at 300°C for 30 days. The reaction conditions were the same as those of Example 7, the H$_2$/SO$_2$ mole ratio was 3, and the cobalt content was 10wt%. It was found that the activity did not lower over the total reaction time, the conversion of SO$_2$ was found to be 88% and the recovery yield of sulfur was 75%.

EXAMPLES 9-17

In order to find an optimum carrier, experiments using various carriers were performed under the same conditions as those in Example 1 and the results thereof are indicated in Table 4 which shows the catalytic activity for various carriers holding 10 wt% cobalt metal. In these Examples, the carrier giving the highest catalytic activity was silica-alumina and the Y-type zeolite (HY zeolite) which was hydrogen-ion exchanged. A slight lowering of the catalytic activity over time was observed with the zeolite carriers. However, the activity still remained high. The carriers giving the highest catalytic activity were acidic carriers such as silica, titanium oxide, zirconia, silica-alumina or HY zeolite. Thus, the catalytic activity of a carrier is substantially influenced by the acidity of the carrier. For example, when magnesium oxide, a base, was used as the carrier, the catalytic activity was found to be low. Therefore, in selecting an optimum carrier, it is preferable to use an acidic carrier such as alumina, silica-alumina or HY zeolite.

Table 4

| Ex. | catalyst | SO$_2$ conversion (%) | sulfur selectivity (%) | sulfur yield (%) | remarks |
|---|---|---|---|---|---|
| 9 | Co/SiO$_2$ | 65.4 | 78.7 | 51.5 | |
| 10 | Co/ZrO$_2$ | 61.9 | 98.6 | 61.0 | |
| 11 | Co/TiO$_2$ | 67.5 | 98.1 | 66.2 | |
| 12 | Co/SiO$_2$-Al$_2$O$_3$ | 76.8 | 95.4 | 73.3 | |
| 13 | Co/MgO | 24.7 | 96.2 | 23.8 | |
| 14 | Co/NaY | 50.3 (45.1) | 95.8 (93.8) | 48.2 (42.3) | activity lowered |
| 15 | Co/HY | 80.5 (77.7) | 95.1 (93.7) | 76.6 (72.8) | activity lowered |
| 16 | Co/HM | 50.9 (46.5) | 77.3 (75.3) | 39.3 (35.0) | activity lowered |
| 17 | Co/activated carbon | 59.2 | 96.5 | 57.1 | |
| - Amount of cobalt held in each catalyst: 10wt% <br> - Parenthetic values indicate lowered activities due to prolonged reaction time. | | | | | |

EXAMPLE 18

In order to find the optimum ratio of reaction gases for each of the catalysts in Examples 9 to 17 such as Co/Al$_2$O$_3$, Co/SiO$_2$, Co/ZrO$_2$, Co/TiO$_2$, Co/SiO$_2$-Al$_2$O$_3$ or Co/HY, experiments were performed with varying ratios of H$_2$/SO$_2$.

The reaction temperature was fixed at 300°C and the space velocity was maintained at 3,600 per hour. The results are indicated in Table 5, in which it can be seen that the recovery rate of sulfur was at its highest when the mole ratio of H$_2$/SO$_2$ for every catalyst was 3. As the mole ratio of H$_2$/SO$_2$ was increased, the recovery rate of sulfur was increased but eventually decreased. Therefore, the mole ratio of H$_2$/SO$_2$ is preferably 2 to 5. The recovery rate of sulfur was more than 70% for most catalysts and the maximum sulfur recovery yield was approximately 89% under the Co/HY catalyst.

Table 5

| catalyst | H$_2$/SO$_2$ mole ratio | | | | | | | |
|---|---|---|---|---|---|---|---|---|
| | 2 | | 3 | | 4 | | 5 | |
| | A | B | A | B | A | B | A | B |
| Co/Al$_2$O$_3$ | 69.7 | 68.5 | 88.2 | 75.1 | 98.0 | 72.3 | 100 | 63.2 |
| Co/SiO$_2$ | 65.4 | 51.5 | 82.3 | 62.5 | 95.0 | 58.7 | 97.4 | 46.7 |
| Co/ZrO$_2$ | 61.9 | 61.0 | 85.9 | 73.8 | 97.2 | 70.2 | 99.8 | 60.8 |
| Co/TiO$_2$ | 67.5 | 66.2 | 88.1 | 74.8 | 98.3 | 72.5 | 100 | 62.5 |
| Co/SiO$_2$-Al$_2$O$_3$ | 76.8 | 73.3 | 93.5 | 85.5 | 99.5 | 77.6 | 100 | 68.2 |
| Co/HY | 80.5 | 76.6 | 95.4 | 88.7 | 100 | 78.5 | 100 | 69.3 |
| - A: Conversion (%) of SO$_2$ <br> - B: Yield (%) of sulfur | | | | | | | | |

EXAMPLE 19

In order to check whether the activities of the catalysts having the two highest activities, Co/SiO$_2$-Al$_2$O$_3$ and Co/HY, were lowered as the reaction time proceeded, experiments to test catalyst deactivation were made at 300°C for 30 days. The reaction conditions were such that the mole ratio of H$_2$/SO$_2$ was 3, and the space velocity was 7,200 per hour. It was found that in the case of Co/SiO$_2$-Al$_2$O$_3$, the activity was not lowered at all and the recovery yield of sulfur was 85%. In the case of the Co/HY, although the activity was lowered very slowly, the recovery rate of sulfur was still relatively high at about 86%.

EXAMPLE 20

For the catalysts having the two highest activities in Example 18, Co/SiO$_2$-Al$_2$O$_3$ and Co/HY, experiments were carried out using a hydrogen-containing gaseous mixture as a reducing agent, instead of pure hydrogen gas. The gaseous mixture was composed of 10% of CO, 5% of CO$_2$, 10% of CH$_4$, 30% of H$_2$, 10% of H$_2$O, 10% of SO$_2$ and 25% of N$_2$, in terms of volume. The tests of catalytic performance were carried out at a reaction temperature of 300°C and a space velocity of 7,200 per hour for ten days. It wsa found that when Co/SiO$_2$-Al$_2$O$_3$ was used as a catalyst, the recovery rate of sulfur was 87%. In the case of Co/HY catalyst, the recovery rate of sulfur was about 88%. Thus, the hydrogen-mixed gas used as the reducing agent did not influence the recovery yield of sulfur, nor did a reaction gas containing about 10% water vapor by volume.

EXAMPLE 21

The reaction experiment was performed using a mechanical mixture of cobalt disulfide (CoS$_2$) and carrier having a relatively high activity. 5g of CoS$_2$ and 25g of carrier were mixed well in a pestle bowl, packed in a reactor and treated with helium at 400°C for two hours. Thereafter, under the same reaction conditions as those in Example 18, an experiment was carried out with the mole ratio of H$_2$/SO$_2$ at 3. The results are indicated in Table 6, which shows that the recovery yield of sulfur was relatively high but less efficient than in the case of a catalyst where the metal sulfide is held in a carrier. Nevertheless, it is clear that the catalyst can be used in the mechanical mixture form of metal sulfide and carrier.

Table 6

| catalyst | SO$_2$ conversion | sulfur recovery yield |
|---|---|---|
| CoS$_2$ + Al$_2$O$_3$ | 77.7% | 62.5% |
| CoS$_2$ + SiO$_2$ | 60.4% | 43.9% |
| CoS$_2$ + ZrO$_2$ | 56.9% | 55.0% |
| CoS$_2$ + TiO$_2$ | 62.5% | 60.1% |
| CoS$_2$ + SiO$_2$-Al$_2$O$_3$ | 71.8% | 66.3% |
| CoS$_2$ + HY | 75.5% | 68.0% |
| - The catalyst is in the mixture form of transition metal and carrier. | | |

Thus, the invention provides means of recovering elemental sulfur from sulfurous acid gas with the aid of a catalyst having a high catalytic activity and giving a high sulfur recovery yield at a relatively low temperature.

Various modifications and alterations to the components and the method of carrying out the invention can be made without departing from the invention as described.

**Claims**

1. A catalyst for use in the reduction of an SO$_x$ species characterised in that the catalyst comprises a sulfide of a transition metal species and at least one carrier.

2. A catalyst as claimed in claim 1, wherein at least some of the said sulfide is held in the carrier.

3. A catalyst as claimed in claim 1, wherein at least some of the said sulfide is mixed with the carrier.

4. A catalyst as claimed in claim 1, wherein the carrier is substantially acidic.

5. A catalyst as claimed in any preceding claim, wherein the carrier is selected from the group consisting of alumina (Al$_2$O$_3$), silica (SiO$_2$), zirconia (ZrO$_2$), titanium dioxide (TiO$_2$), silica-alumina (SiO$_2$-Al$_2$O$_3$), acidic zeolites and activated carbon.

6. A catalyst as claimed in any preceding claim, wherein the transition metal in said sulfide species is at least one metal selected from the group consisting of chromium, molybdenum, tungsten, iron, cobalt and nickel.

7. A catalyst as claimed in any preceding claim, wherein the transition metal in said sulfide is in the range of 2-30 wt% based on the total weight of said carrier.

8. A method for manufacturing a catalyst for use in the reduction of an $SO_x$ characterised in that the method comprises the steps of:
combining a salt of a transitional metal species with a carrier and drying the product;
converting said salt into an oxide of the said metal species; and
converting said oxide into a sulfide of the said metal species.

9. A method of manufacturing a catalyst as claimed in claim 8, wherein at least some of the salt is held on the carrier prior to drying.

10. A method of manufacturing a catalyst as claimed in claim 8, wherein at least some of the salt is mixed with the carrier prior to drying.

11. A method of manufacturing a catalyst as claimed in claim 8, wherein the salt is converted into the oxide by a sintering process.

12. A method of manufacturing a catalyst as claimed in claim 8, wherein the oxide is converted into the sulfide by pre-treating said oxide of the transition metal species with a gaseous mixture containing at least one sulfur compound selected from the group consisting of hydrogen sulfide ($H_2S$), mercaptan, carbon disulfide ($CS_2$) and carbon monoxide sulfide (COS), and hydrogen at a temperature of 300°C to 450°C.

13. A method for manufacturing a catalyst as claimed in claim 8, wherein the transition metal in the said salt is at least one metal selected from the group consisting of chromium, molybdenum, tungsten, iron, cobalt and nickel.

14. A method for manufacturing a catalyst as claimed in claim 8, wherein the said carrier is substantially acidic.

15. A method for manufacturing a catalyst as claimed in claim 8, wherein the said carrier is at least one selected from the group consisting of alumina ($Al_2O_3$), silica ($SiO_2$), zirconia ($ZrO_2$), titanium oxide ($TiO_2$), silica-alumina ($SiO_2$-$Al_2O_3$), acidic zeolites and activated carbon.

16. A method for manufacturing a catalyst as claimed in claim 12, wherein said gaseous mixture is 2-20% hydrogen sulfide by volume, with the remainder being substantially hydrogen.

17. A method for manufacturing a catalyst as claimed in claim 12, wherein said pre-treating is at a temperature of 350°C to 425°C.

18. A method for manufacturing a selective reducing catalyst as claimed in claim 8, wherein the content of the transition metal in said transition metal oxide species is 2-30wt% based on the total weight of said carrier.

19. A method as claimed in any preceding claim, wherein the catalyst is a sulfurous acid gas reducing catalyst.

20. A method for recovering elemental sulfur from sulfurous acid gas by a catalytic reducing process using a catalyst as claimed in any of claims 1 to 7.

21. A method for recovering elemental sulfur from sulfurous acid gas as claimed in claim 20, wherein said catalytic reducing process occurs at a reaction temperature of 200°C to 350°C and a space velocity of 1,000 to 10,000 per hour, and, wherein the reducing agent is $H_2$ and the mole ratio of $H_2/SO_2$ is substantially 1 to 10.

**European Patent Office**

## EUROPEAN SEARCH REPORT

Application Number

EP 95 10 8213

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A,D | US-A-2 361 825 (DOUMANI)<br>* column 2, line 7 - line 46 *<br>--- | 1 | C01B17/04 |
| A | US-A-2 863 725 (A. H. MAUDE ET AL)<br>* column 9, line 7 - column 10, line 3 *<br>--- | 8 | |
| A,D | US-A-1 880 741 (BOSWELL)<br>* claim 7 *<br>--- | 20 | |
| A | GB-A-2 183 228 (SHELL INTERNATIONALE RESEARCH MAATSCHAPPIJ B. V.)<br>* page 2, line 13 - line 20 *<br>--- | 20 | |
| A | US-A-3 752 877 (D. K. BEAVON)<br>* claims 1,2 *<br>--- | 20 | |
| A | US-A-3 965 041 (VAN KLINKEN ET AL)<br>* claim 1 *<br>----- | 8 | |

TECHNICAL FIELDS
SEARCHED (Int.Cl.6)

C01B
B01J

The present search report has been drawn up for all claims

| Place of search | Date of completion of the search | Examiner |
|---|---|---|
| BERLIN | 25 March 1996 | Clement, J-P |

EPO FORM 1503 03.82 (P04C01)